# EUROPEAN PATENT SPECIFICATION

(11) **EP 1 391 229 B1**
(45) Date of publication and mention of the grant of the patent: **25.01.2006**
(21) Application number: 02255769.8
(22) Date of filing: 19.08.2002
(51) Int. Cl.: B01D 29/48, B01D 29/96

(54) **Fluid filtration system with helical filter element**
Vorrichtung zur Filtration von Flüssigkeiten mit einem spiralförmigen Filterelement
Système de filtration de fluide avec un élément filtrant hélicoide

(43) Date of publication of application: 25.02.2004
(73) Proprietor: Perkins Engines Company Limited, Peterborough, PE1 5NA (GB)
(72) Inventor: Evans, John R., CW3 9JU Crewe, Cheshire (GB)
(74) Representative: Murnane, Graham John

(56) References cited:
- EP-A- 0 346 264
- US-A- 3 736 641
- US-A- 5 207 930
- US-A- 5 460 721
- US-B1- 6 205 971

## Description

### TECHNICAL FIELD

This invention relates to filter elements in fluid filtration systems. It is particularly, but not exclusively, applicable to expandable oil filter elements used within piston cooling jets in reciprocating piston engines.

### BACKGROUND

Piston cooling jets are widely used on reciprocating piston engines, particularly diesel cycle engines, as additional cooling means. They work by directing a jet of oil or other fluid on to the pistons during the operation of the engine.

The jets are generally located within the crankcase housing and direct a jet of oil to the underside of the piston. To ensure a precisely located jet of oil the jets have nozzles which are of a relatively small diameter internal bore. The oil used is generally the lubricating oil contained within the sump of the engine. The oil contained within the sump often contains impurities and particulates. To prevent the jets becoming blocked the oil may be filtered. Over time the filters degrade and become blocked and consequently require replacement or cleaning. Prior art filtration methods rely to a large extent on a central filter within the engine's oil circuit or on providing an additional simple paper filter for the cooling jets.

Known filter elements can be difficult to replace or may not provide adequate filtration if the oil circuit is compromised downstream of a central filter. This can happen, for example, if repairs are undertaken in an environment where the risk of contamination from airborne particulates is significant. The present invention seeks to provide a filter element which overcomes one or more of these problems.

### SUMMARY OF THE INVENTION

The present invention provides a filter element for a fluid filtration system, the filter element comprising a length of filter material arranged helically in a substantially tubular form, in which opposing longitudinal edges of the length are in facing relationship. The filter element is resiliently and selectively moveable from a rest position, in which the opposing longitudinal edges are a rest spacing apart from each other, to an expanded fitting position, in which the opposing longitudinal edges are a fitting spacing apart from each other.

The present invention also provides a method of fitting a filter element on a fluid filtration system, the filter element comprising a length of filter material arranged helically in a substantially tubular form. The method includes the steps of expanding the filter element to an expanded fitting position in which the opposing longitudinal edges of the length are a fitting spacing apart from each other by applying a torque around a central axis of the tubular form in an opposite direction to the filter's helix. The filter element is then fitted over a wall portion of the fluid filtration system, and allowed to retract to a rest position surrounding the wall portion. In this rest position, opposing longitudinal edges of the length are in facing relationship to each other and a rest spacing apart from each other.

### BRIEF DESCRIPTION OF THE DRAWINGS

Fig. 1 is a side view of a filter element according to a first embodiment of the present invention in a rest position;
Fig. 2 is a side view of the filter element of Fig. 1 in an expanded position;
Fig. 3 is a side view of a piston cooling jet including a fluid filtration system utilising the filter element of Fig. 1; and
Fig. 4 is a part cross sectional side view of the piston cooling jet of Fig. 3.

### DETAILED DESCRIPTION

Referring to the drawings, one embodiment of the present invention will now be described, by way of example only.

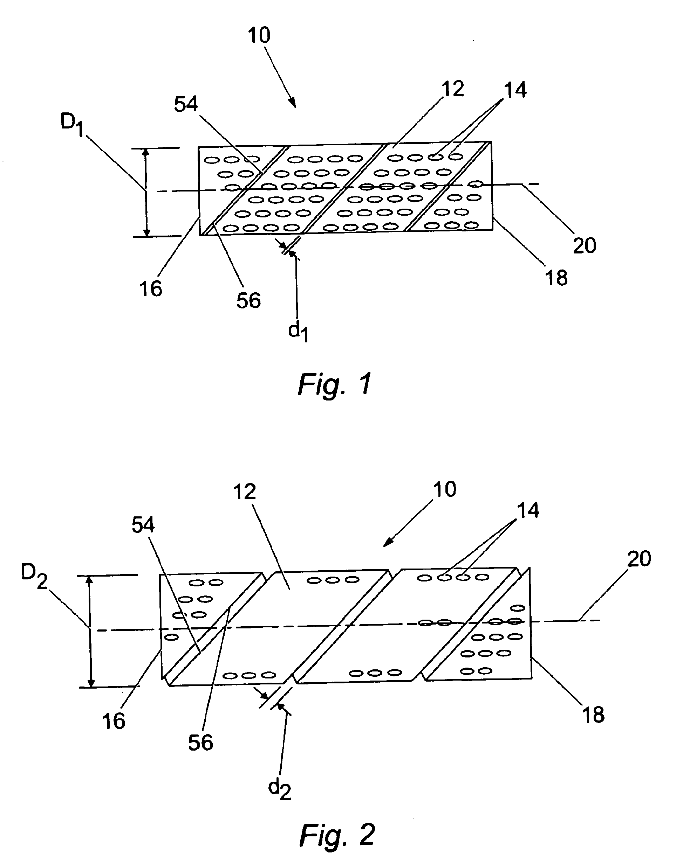

A filter element 10 is shown in detail in Figs. 1 and 2. The filter element 10 comprises a length of filter material 12, arranged helically in a tubular form.

In this embodiment the filter material 12 is a metal strip with circular perforations 14 provided through the strip. It is to be understood that the perforations 14 can be of any shape, provided that the dimensions of the perforations are such that particulates having a size greater than the permissible particulate size are prevented from passing through the perforations. It is also to be understood that the metal used may be any suitable for the application, but in this case is steel.

Opposing ends 16,18 of the length of filter material 12 are shaped so that when arranged in the tubular form the opposing ends 16,18 of the filter element 10 form planar ends, perpendicular to the central axis 20 of the tubular form. Overall the filter element 10 is therefore cylindrical.

Partly due to the elastic properties of the filter material and partly due to the helical tube form, the filter element 10 displays a resilient character. It is therefore possible to apply a torque to the filter element 10, manually or otherwise, to expand the filter element 10 (see Fig. 2). By doing this the diameter of the filter element 10 can be increased from a rest diameter D₁ to a fitting diameter D₂. When the torque is released the filter element 10 will return to its rest diameter D₁.

The filter element 10 can either be formed by rolling a flat sheet into the helical tube form, or alternatively the filter element 10 may be cut from a tubular section. Other forms of manufacture may also be used to form the filter element 10.

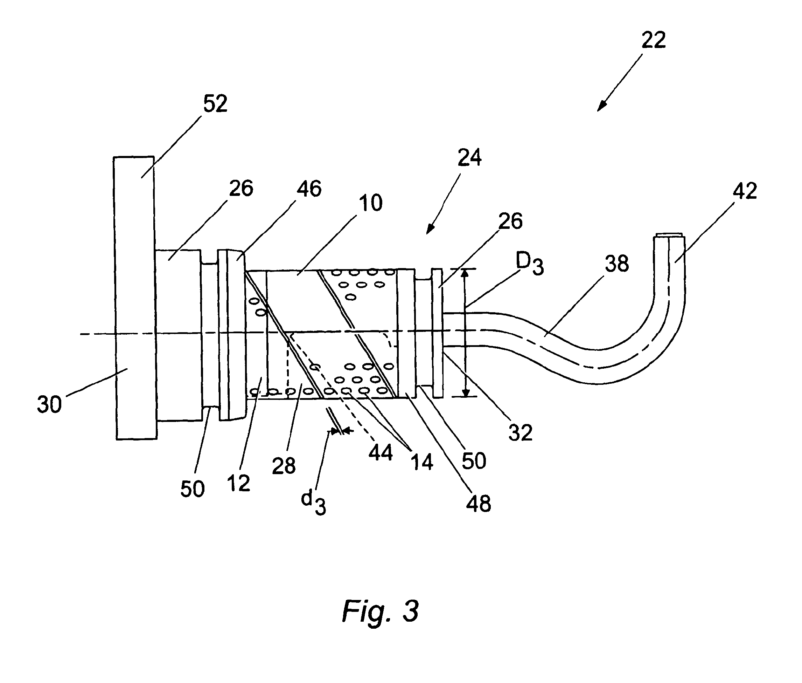

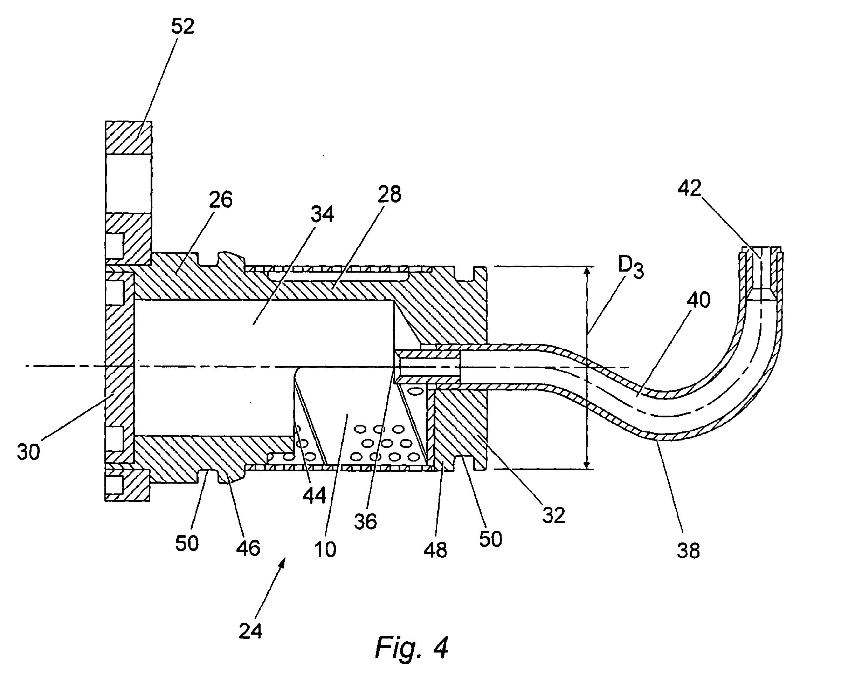

Referring now to Figs. 3 and 4 there is shown a piston cooling jet generally referred to as 22, including a fluid filtration system 24 utilising a filter element 10.

The piston cooling jet 22 includes a cooling jet housing 26. The cooling jet housing 26 has a substantially cylindrical side wall 28, a first end wall 30 and a second end wall 32 defining therein a fluid chamber 34.

A tapered fluid outlet 36 is located in the first end wall 30. A jet nozzle 38 extends from the fluid outlet 36. The jet nozzle 38 has an internal passageway 40 and terminates in an internally tapered jet nozzle outlet 42.

It will be understood that the shapes of the fluid outlet 36, jet nozzle outlet 38 and jet nozzle 42 may be varied and do not form part of the present invention.

The interior of the cooling jet housing 26 is hollow and defines a fluid chamber 34. A fluid inlet 44 is formed in the cylindrical side wall 28 of the cooling jet housing 26 as a generally rectangular aperture.

A first abutment 46 is provided on the cylindrical side wall 28 near the first end wall 30. The first abutment 46 is in the general form of an increase in diameter of the cooling jet housing 26, to form a flange type formation. A second abutment 48 is provided near the second end wall 32. The second abutment 48 is similar in general form to the first abutment 46, being a general increase in diameter of the cooling jet housing 26, to form a flange type formation.

Two circumferential grooves 50 are provided on the cylindrical side wall 28. A mounting bracket 52 extends from one end of the piston cooling jet housing 26 adjacent to the first end wall 30.

The circumferential grooves 50 receive O-rings (not shown). The cooling jets 40 are fitted into a cylinder block (not shown) of a reciprocating piston engine (not shown) in a manner which is known in the art by means of shafts in the cylinder block (not shown). The shafts extend perpendicular to the cylinders of the cylinder block (not shown). The piston cooling jets 22 are positioned in the shafts with the jet nozzles 38 directed toward the cylinders, one cooling jet 22 per shaft/cylinder. The piston cooling jets 22 are attached to the cylinder block by a bolt (not shown) which engages the mounting bracket 52. The mounting bracket 52 aids in positioning the jet nozzle 38, so the jet of coolant oil is directed at a desired location onto the underside of the reciprocating piston (not shown).

The piston cooling jets 40 are fed with coolant oil by a supply cavity (not shown), bored through the cylinder block perpendicular to the shafts (not shown). The supply cavity and individual shafts are in fluid communication. The O-rings (not shown) ensure a seal to impede oil escaping from a circuit defined by the shafts, cavity and cooling jets 40.

### INDUSTRIAL APPLICABILITY

One or more piston cooling jets 22 are provided within an internal combustion engine (not shown), generally one per cylinder. A supply of coolant oil is provided to the piston cooling jet 22 by the supply cavity (not shown) described above, the oil entering the fluid chamber 34 via the fluid inlet 44.

As described above, the coolant oil will generally be taken directly from the engine sump and can therefore be contaminated by impurities and particulates. As the fluid passes through the filter element 10, the contaminants are reduced.

The filter element 10 requires periodic replacement or cleaning to maintain the efficiency of the system. In order to effect replacement or cleaning of the filter element 10, the piston cooling jet 22 is first removed from the shaft in the cylinder block (not shown)

When a filter element 10 is to be fitted onto the cooling jet 22, the filter element 10 is initially in its unfitted rest position with an associated rest diameter D₁ as measured across its opposing ends (see Fig. 1). The opposing longitudinal edges 54, 56 are separated from each other by a rest spacing d₁ in the rest position. The rest position will be understood to include the state in which at least part of the opposing longitudinal edges 54, 56 may be in contact such that the rest spacing is zero. Where the opposing longitudinal edges 54, 56 are physically spaced apart in the rest position, the rest spacing d₁ will be smaller than the diameter or other minimum dimension of the perforations 14, so that the filter element does not permit the passage between the opposing longitudinal edges 54, 56 of particulates having a size greater than the permissible particulate size.

A torque is applied about axis 20 in the opposite direction to the direction of the filter element's helix to fit the filter element 10. This expands the filter element 10 until its diameter reaches a fitting diameter D₂, as measured across its opposing ends (see Fig. 2). It is to be understood that the torque in this case is assumed to be applied manually, but the application of torque may also be mechanised or otherwise automated. With the filter element 10 in its expanded fitting position, the opposing longitudinal edges 54,56 are spaced apart from each other by a fitting spacing d₂, which will be understood to be greater than the rest spacing d₁.

The filter element 10 can then be placed over the cooling jet since its diameter will be sufficiently greater, and manoeuvred between the first abutment 46 and the second abutment 48 over the cylindrical side wall 28. The torque acting on the filter element 10 is then released and the filter element 10 returns to a fitted rest position with an associated fitted rest diameter D₃, with the opposing ends 16,18 abutting against the first abutment 46 and second abutment 48.

It will be understood that the fitted rest position may be the same as the unfitted rest position, such that D₃=D₁. However the diameter of the side wall 28 may be such that D₃ is slightly greater than D₁, and the rest spacing d₃ in the rest position is greater than the rest spacing d₁ in the unfitted rest position. However, the rest spacing d₃ will be smaller than the diameter or other minimum dimension of the perforations 14.

When the filter element 10 is to be replaced or removed for cleaning, torque is once again applied to the filter element 10 to open it to its fitting diameter D₂. The filter element 10 is then taken off the piston cooling jet 22, and a new or a cleaned filter element 10 fitted in the manner mentioned above.

It is to be understood that the invention is not limited to the embodiment described, but may be varied in both construction and detail.

For example, it is envisaged that the filter element could be constructed from any suitable filter material and is not limited to a perforated metal strip. The filter material could be of resilient plastic and a woven or non-woven mesh material could be used instead of perforations.

It is to be understood that even though the embodiments described herein relate particularly to piston cooling jet applications for internal combustion engines, the present invention could be applied to any appropriate fluid filtration system such as for example water filtration or air filtration.

The fluid flow may also be reversed, the fluid inlet being within the tubular filter and the fluid flowing radially outward and across the filter.

## Claims

1. A filter element (10) for a fluid filtration system (24), the filter element (10) comprising a length of filter material (12) arranged helically in a substantially tubular form, in which opposing longitudinal edges (54,56) of the length are in facing relationship, the filter element (10) being resiliently and selectively moveable from a rest position in which the opposing longitudinal edges (54,56) are a rest spacing apart from each other, to an expanded position in which the opposing longitudinal edges (54,56) are a fitting spacing apart from each other.

2. A filter element (10) according to Claim 1 wherein the filter material (12) is a perforated strip.

3. A filter element (10) according to Claims 1 or 2 wherein the filter material (12) is metal.

4. A filter element (10) according to any preceding claim in which opposing ends (16,18) of the length of filter material (12) are shaped so that the tubular form is substantially cylindrical, in which each end of the tubular form defines a circle in a plane normal to a central axis (20) of the tubular form.

5. A fluid filtration system (24) comprising a fluid chamber (34) having a fluid inlet (44) and a fluid outlet (36), and a filter element (10) according to any preceding claim, whereby the filter element (10) in its rest position is arranged such that the filter material (12) of the filter element (10) covers one of said fluid inlet (44) or fluid outlet (36).

6. A fluid filtration system (24) according to Claim 5 including a housing (26) defining said fluid chamber (34), said housing (26) having a substantially cylindrical wall portion (28) in which is provided said one of said fluid inlet (44) or fluid outlet (36) wherein the filter element (10) is arranged to surround said cylindrical wall portion (28).

7. A fluid filtration system (24) according to Claims 5 or 6 including first (46) and second abutments (48) provided on the cylindrical wall portion (28), to retain the filter element in the rest position.

8. A piston cooling jet (22) for an internal combustion engine in which the piston cooling jet (22) includes a fluid filtration system (24) according to any of Claims 5 to 7.

9. An internal combustion engine including at least one piston cooling jet (22) according to Claim 8.

10. A method of fitting a filter element (10) on a fluid filtration system (24), wherein the filter element (10) comprises a length of filter material (12) arranged helically in a substantially tubular form, the method comprising the steps of,
expanding the filter element (10) to an expanded fitting position in which opposing longitudinal edges (54,56) of the length (12) are a fitting spacing (d₂) apart from each other by applying a torque around a central axis (20) of the tubular form in an opposite direction to the filter's helix,
fitting the filter element (10) around a fluid chamber (34) of the fluid filtration system (24),
allowing the filter element (10) to retract to a rest position surrounding the fluid chamber (34) in which the opposing longitudinal edges (54,56) of the length (12) are a rest spacing (d₃) apart from each other, so that the filter element (10) covers a fluid inlet (44) or fluid outlet (36) of said fluid chamber (34).

## Patentansprüche

1. Ein Filterelement (10) für ein Fluidfiltrationssystem (24), wobei das Filterelement (10) ein Stück Filtermaterial (12) beinhaltet, das spiralförmig in einer im Wesentlichen röhrenförmigen Form angeordnet ist, wobei sich gegenüberliegende Längskanten (54, 56) des Stücks einander gegenüberstehen, wobei das Filterelement (10) elastisch und selektiv aus einer Ruheposition, in der die gegenüberliegenden Längskanten (54, 56) um einen Ruheabstand voneinander entfernt angeordnet sind, in eine erweiterte Position, in der die gegenüberliegenden Längskanten (54, 56) um einen passenden Einbau-Abstand voneinander entfernt angeordnet sind, bewegt werden kann.

2. Filterelement (10) gemäß Anspruch 1, wobei das Filtermaterial (12) ein perforierter Streifen ist.

3. Filterelement (10) gemäß Anspruch 1 oder 2, wobei das Filtermaterial (12) Metall ist.

4. Filterelement (10) gemäß einem der vorhergehenden Ansprüche, in dem gegenüberliegende Enden (16, 18) des Stücks Filtermaterial (12) so geformt sind, dass die röhrenförmige Form im Wesentlichen zylindrisch ist, wobei jedes Ende der röhrenförmigen Form einen Kreis in einer Ebene definiert, die zu einer zentralen Achse (20) der röhrenförmigen Form senkrecht ist.

5. Ein Fluidfiltrationssystem (24), das eine Fluidkammer (34) mit einem Fluideinlass (44) und einem Fluidauslass (36) und ein Filterelement (10) gemäß einem der vorhergehenden Ansprüche beinhaltet, wobei das Filterelement (10) in seiner Ruheposition so angeordnet ist, dass das Filtermaterial (12) des Filterelements (10) entweder den Fluideinlass (44) oder den Fluidauslass (36) abdeckt.

6. Fluidfiltrationssystem (24) gemäß Anspruch 5 einschließlich eines Gehäuses (26), das die Fluidkammer (34) definiert, wobei das Gehäuse (26) einen im Wesentlichen zylindrischen Wandabschnitt (28) aufweist, in dem entweder der Fluideinlass (44) oder der Fluidauslass (36) bereitgestellt ist, wobei das Filterelement (10) angeordnet ist, um den zylindrischen Wandabschnitt (28) zu umgeben.

7. Fluidfiltrationssystem (24) gemäß Anspruch 5 oder 6 einschließlich einem ersten (46) und einem zweiten Vorsprung (48), die auf dem zylindrischen Wandabschnitt (28) bereitgestellt sind, um das Filterelement in der Ruheposition zu halten.

8. Eine Kolbenkühldüse (22) für einen Verbrennungsmotor, wobei die Kolbenkühldüse (22) ein Fluidfiltrationssystem (24) gemäß einem der Ansprüche 5 bis 7 beinhaltet.

9. Ein Verbrennungsmotor einschließlich mindestens einer Kolbenkühtdüse (22) gemäß Anspruch 8.

10. Ein Verfahren zum Einbauen eines Filterelements (10) auf ein Fluidfiltrationssystem (24), wobei das Filterelement (10) ein Stück Filtermaterial (12) beinhaltet, das spiralförmig in einer im Wesentlichen röhrenförmigen Form angeordnet ist, wobei das Verfahren die folgenden Schritte beinhaltet:
Erweitern des Filterelements (10) auf eine erweiterte Einbauposition, in der die gegenüberliegenden Längskanten (54, 56) des Stücks (12) um einen Einbau-Abstand (d₂) voneinander entfernt angeordnet sind, durch das Anwenden einer Drehkraft um eine zentrale Achse (20) der röhrenförmigen Form in eine entgegengesetzte Richtung zu der Helix des Filters,
Einbauen des Filterelements (10) um eine Fluidkammer (34) des Fluidfiltrationssystems (24),
Ermöglichen, dass sich das Filterelement (10) in eine die Fluidkammer (34) umgebende Ruheposition.zurückzieht, in der die gegenüberliegenden Längskanten (54, 56) des Stücks (12) um einen Ruheabstand (d₃) voneinander entfernt angeordnet sind, so dass das Filterelement (10) einen Fluideinlass (44) oder Fluidauslass (36) der Fluidkammer (34) abdeckt.

## Revendications

1. Un élément filtrant (10) destiné à un système de filtration de fluide (24), l'élément filtrant (10) comportant une longueur de matériau filtrant (12) arrangée de façon hélicoïdale en une forme substantiellement tubulaire, dans lequel des bords longitudinaux opposés (54, 56) de la longueur sont dans une relation de face à face, l'élément filtrant (10) étant déplaçable de façon résiliente et sélective d'une position de repos dans laquelle les bords longitudinaux opposés (54, 56) sont en écartement de repos l'un par rapport à l'autre, à une position étendue dans laquelle les bords longitudinaux opposés (54, 56) sont en écartement d'installation l'un par rapport à l'autre.

2. Un élément filtrant (10) selon la revendication 1 dans lequel le matériau filtrant (12) est une bande perforée.

3. Un élément filtrant (10) selon les revendications 1 ou 2 dans lequel le matériau filtrant (12) est du métal.

4. Un élément filtrant (10) selon n'importe quelle revendication précédente dans lequel des extrémités opposées (16, 18) de la longueur du matériau filtrant (12) sont conformées de façon à ce que la forme tubulaire soit substantiellement cylindrique, dans lequel chaque extrémité de la forme tubulaire définit un cercle dans un plan perpendiculaire à un axe central (20) de la forme tubulaire.

5. Un système de filtration de fluide (24) comportant une chambre de fluide (34) ayant un orifice d'entrée de fluide (44) et un orifice de sortie de fluide (36), et un élément filtrant (10) selon n'importe quelle revendication précédente, grâce à quoi l'élément filtrant (10) dans sa position de repos est arrangé de telle sorte que le matériau filtrant (12) de l'élément filtrant (10) couvre soit ledit orifice d'entrée de fluide (44), soit ledit orifice de sortie de fluide (36).

6. Un système de filtration de fluide (24) selon la revendication 5 comprenant un logement (26) définissant ladite chambre de fluide (34), ledit logement (26) ayant une portion de paroi substantiellement cylindrique (28) dans laquelle est prévu cedit orifice parmi l'orifice d'entrée de fluide (44) et l'orifice de sortie de fluide (36) dans lequel l'élément filtrant (10) est arrangé pour entourer ladite portion de paroi cylindrique (28).

7. Un système de filtration de fluide (24) selon les revendications 5 ou 6 comprenant une première (46) et une deuxième butée (48) prévues sur la portion de paroi cylindrique (28), afin de retenir l'élément filtrant dans la position de repos.

8. Un jet de refroidissement de pistons (22) destiné à un moteur à combustion interne dans lequel le jet de refroidissement de pistons (22) comprend un système de filtration de fluide (24) selon n'importe lesquelles des revendications 5 à 7.

9. Un moteur à combustion interne comprenant au moins un jet de refroidissement de pistons (22) selon la revendication 8.

10. Un procédé d'installation d'un élément filtrant (10) sur un système de filtration de fluide (24), dans lequel l'élément filtrant (10) comporte une longueur de matériau filtrant (12) arrangée de façon hélicoïdale en une forme substantiellement tubulaire, le procédé comportant les étapes de,
étendre l'élément filtrant (10) jusqu'à une position d'installation étendue dans laquelle les bords longitudinaux opposés (54, 56) de la longueur (12) sont en écartement d'installation (d₂) l'un par rapport à l'autre en appliquant un couple autour d'un axe central (20) de la forme tubulaire dans une direction opposée à l'hélice du filtre,
installer l'élément filtrant (10) autour d'une chambre de fluide (34) du système de filtration de fluide (24),
laisser l'élément filtrant (10) se rétracter jusqu'à une position de repos entourant la chambre de fluide (34) dans laquelle les bords longitudinaux opposés (54, 56) de la longueur (12) sont en écartement de repos (d₃) l'un par rapport à l'autre, de sorte que l'élément filtrant (10) couvre un orifice d'entrée de fluide (44) ou un orifice de sortie de fluide (36) de ladite chambre de fluide (34).
